(19) Europäisches Patentamt
European Patent Office
Office européen des brevets

(11) Veröffentlichungsnummer: **0 490 150 B1**

# (12) EUROPÄISCHE PATENTSCHRIFT

(45) Veröffentlichungstag der Patentschrift: **26.07.95**

(51) Int. Cl.[6]: **C08G 18/08**, C08G 18/28, C08L 75/04, D06M 15/564

(21) Anmeldenummer: **91120025.1**

(22) Anmeldetag: **25.11.91**

## (54) In Wasser dispergierbare, elektrolytstabile Polyetherester-modifizierte Polyurethanionomere.

(30) Priorität: **08.12.90 DE 4039193**

(43) Veröffentlichungstag der Anmeldung:
**17.06.92 Patentblatt 92/25**

(45) Bekanntmachung des Hinweises auf die Patenterteilung:
**26.07.95 Patentblatt 95/30**

(84) Benannte Vertragsstaaten:
**AT BE CH DE FR GB IT LI**

(56) Entgegenhaltungen:
**EP-A- 0 154 678**
**EP-A- 0 207 414**
**EP-A- 0 270 126**
**EP-A- 0 325 918**
**EP-A- 0 429 983**
**US-A- 4 068 035**

(73) Patentinhaber: **BAYER AG**

**D-51368 Leverkusen (DE)**

(72) Erfinder: **Münzmay, Thomas, Dr.**
**Goethestrasse 57d**
**W-4047 Dormagen (DE)**
Erfinder: **Schmidt, Manfred, Dr.**
**Zeisigstrasse 5**
**W-4047 Dormagen (DE)**
Erfinder: **Nussbaum, Peter**
**Opladenerstrasse 104**
**W-5090 Leverkusen 1 (DE)**
Erfinder: **Ehlert, Hans-Albert, Dipl.-Ing.**
**Walter-Flex-Strasse 24**
**W-5090 Leverkusen 1 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Wäßrige Dispersionen von Polyurethanen oder Polyurethanharnstoffen sind seit langem bekannt (vgl. z.B. Angewandte Chemie, 82, (1970) Seiten 53 bis 63; DE-OS 2 314 512 oder 2 314 513) und besitzen ein hohes Qualitätsniveau.

Nicht zuletzt die Tatsache, daß viele dieser Dispersionen frei von Emulgatoren sind, trägt zu diesem hohen Niveau bei. Sie enthalten auf chemischem Wege eingebaute hydrophile Zentren, die die Selbstemulgierbarkeit der ansonsten hydrophoben Polymere bewirken.

Die in den bekannten, in Wasser dispergierbaren Polyurethanen bzw. Polyurethanharnstoffen eingebauten hydrophilen Zentren können sowohl salzartige, d.h. ionische Gruppen als auch hydrophile nichtionische Gruppen sein.

Zu den erstgenannten "Polyurethanionomeren" gehören sowohl chemisch fixierte Kationen, d.h. insbesondere chemisch eingebaute Ammoniumionen aufweisende Polyurethane als auch chemisch fixierte Anionen, d.h. insbesondere eingebaute Sulfonat- oder Carboxylatgruppen aufweisende Polyurethane. Zu den letztgenannten nichtionischen, in Wasser dispergierbaren Polyurethanen gehören insbesondere die seitenständige Polyethylenoxidketten-aufweisenden Polyurethane bzw. Polyurethanharnstoffe gemäß DE-OS 2 314 512 und 2 314 513.

Die Dispersionen dieser Polyurethane besitzen je nach Art des hydrophilen Zentrums verschiedene, charakteristische Eigenschaftsbilder. So sind Polyurethanionomerdispersionen, da die in ihnen enthaltenen Salzgruppen in ihrer Löslichkeit praktisch nicht temperaturabhängig sind, gegen Erhitzen bis zum Sieden stabil, nichtionische Dispersionen koagulieren dagegen bereits beim Erhitzen auf mittlere Temperatur (ca. 60 °C), da die Polyethylenoxid-Seitenketten bei höherer Temperatur ihre Löslichkeit in Wasser allmählich verlieren. Im Gegensatz zu Ionomeren sind diese Dispersionen aber gegen den Zusatz praktisch unbegrenzter Mengen an Elektrolyten beständig und auch nach dem Gefrieren und Auftauen stabil.

Die Empfindlichkeit gegenüber Elektrolyten ist bei kationischen Polyurethanen besonders groß. In Wasser dispergierte Polyurethane mit quartären Ammonium- oder teitiären Sulfoniumgruppen koagulieren sofort, selbst wenn nur sehr geringe Mengen eines Elektrolyten mit einwertigen Ionen, wie Natriumchlorid in wäßriger Lösung zugesetzt wird. Aufgrund dieser Eigenschaft ist die Herstellung und die Anwendung kationischer Polyurethandispersionen mit besonderen Problemen verbunden. So muß in der Regel zur Herstellung Wasser verwendet werden, das weitgehend von Ionen frei ist. "Hartes" Wasser führt zu einer unerwünschten Vergröberung der dispergierten Teilchen oder zur teilweisen Koagulation.

Aus den DE-OS 2 551 094, DE-OS 2 651 505 und DE 2 730 514 ist bekannt, daß die Elektrolytempfindlichkeit von wäßrigen Polyurethanionomeren durch die Mitverwendung von end- und/oder seitenständigen Polyethylenoxid-haltigen Polyethern drastisch vermindert werden kann. Allerdings bewirkt die Mitverwendung von ins Polymer eingebauten Polyethylenoxideinheiten eine bleibenden Hydrophilie, die die Verwendung derartiger ionisch-nichtionisch modifizierter Polyurethane für viele Anwendungsbereiche, z.B. Textilhochveredelung, stark einschränkt.

Überraschenderweise wurde nun gefunden, daß man die bekannten nachteiligen Eigenschaften nichtionisch stabilisierter Polyurethanionomer-Dispersionen vermeiden kann, wenn man in das Polyurethanionomer bestimmte Polyetherestergruppen einbaut.

Die vorliegende Erfindung betrifft in Wasser dispergierbare Polyetherester-modifizierte Polyurethanionomere, aufgebaut aus difunktionellen organischen Polyisocyanaten mit Acylharnstoffgruppen der Formel

$$-NH-CO-\underset{|}{N}-CO-R \quad (III),$$

wobei

R für einen gesättigten oder ungesättigen einwertigen aliphatischen Kohlenwasserstoffrest mit bis zu 35 Kohlenstoffatomen, vorzugsweise mit 9 bis 22 Kohlenstoffatomen, oder einen einwertigen aromatischen Kohlenwasserstoffrest mit 6 bis 10 Kohlenwassserstoffatomen oder einen einwertigen araliphatischen Kohlenwasserstoffrest mit 7 bis 10 Kohlenstoffatomen steht, wobei bei Vorliegen von mehreren Resten R im gleichen Molekül gleichzeitig unterschiediche Reste R vorliegen können,

im Polyurethan-Grundgerüst, mit einem Gehalt an ionogenen vorzugsweise kationogenen Gruppen von 10 bis 100, vorzugsweise 15 bis 50 Milliäquivalenten pro 100 g Ionomer und einem Gehalt an Polyetheresterresten von 2 bis 40 Gew.-%, vorzugsweise 5 bis 35 Gew.-%, besonders bevorzugt von 5 bis 25 Gew.-% und einem Gehalt an Ethylenoxideinheiten von 1 bis 35 Gew.-%, vorzugsweise 5 bis 25 Gew.-%, jeweils bezogen auf Polyetherester-modifiziertes Polyurethanionomer, worin das Polyetherester-modifizierte Molekülteil der allgemeinen Formel

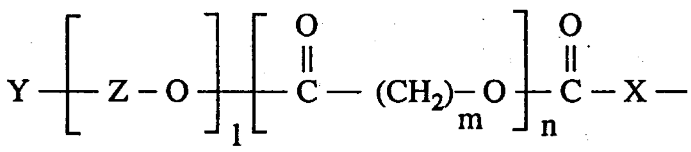 (I)

entspricht,
in welcher

Y für $R_1$-O- oder

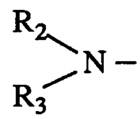

steht,

worin

$R_1$ für einen gesättigten aliphatischen Kohlenwasserstoffrest mit 1 bis 24, vorzugsweise 4 bis 18 Kohlenstoffatomen, welcher gegebenenfalls durch 1 oder 2 Sauerstoffatome unterbrochen ist; einen ungesättigten aliphatischen Kohlenwasserstoffrest mit 2 bis 24, vorzugsweise 4 bis 18 Kohlenstoffatomen; einen gesättigten oder ungesättigten cycloaliphatischen Kohlenwasserstoffrest mit 3 bis 8, vorzugsweise 5 bis 7 Kohlenstoffatomen welcher gegebenenfalls 1 bis 3 Heteroatome aus der Reihe Sauerstoff, Schwefel, Stickstoff enthält; einen aromatischen Kohlenwasserstoffrest mit 6 bis 10 Kohlenstoffatomen, vorzugsweise Phenyl oder Naphthyl; einen araliphatischen Kohlenwasserstoffrest mit 6 bis 10 Kohlerstoffatomen im Arylteil, vorzugsweise Phenyl oder Naphthyl und 1 bis 14 Kohlenstoffatomen im aliphatischen Teil steht,

$R_2$ und $R_3$ gleich oder verschieden sind und jeweils für einen gesättigten aliphatischen Kohlenwasserstoffrest mit 1 bis 18, vorzugsweise 1 bis 8 Kohlenstoffatomen; einen ungesättigten aliphatischen Kohlenwasserstoffrest mit 2 bis 18, vorzugsweise 2 bis 8 Kohlenstoffatomen; einen gesättigten oder ungesättigten cycloaliphatischen Kohlenwasserstoffrest mit 3 bis 8, vorzugsweise 5 bis 7 Kohlenstoffatomen welcher gegebenenfalls 1 bis 3 Heteroatome aus der Reihe Sauerstoff, Schwefel, Stickstoff enthält; einen aromatischen Kohlenwasserstoffrest mit 6 bis 10 Kohlenstoffatomen, vorzugsweise Phenyl oder Naphthyl; einen araliphatischen Kohlenwasserstoffrest mit 6 bis 10 Kohlenstoffatomen im Arylteil, vorzugsweise Phenyl oder Naphthyl und 1 bis 14 Kohlenstoffatomen im aliphatischen Teil steht,

Z die Komponenten (a) und (b)

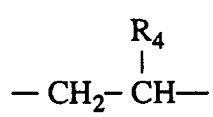 (a)

$—CH_2—CH_2—$ (b)

enthält, worin

$R_4$ für einen gesättigten aliphatischen Kohlenwasserstoffrest mit 1 bis 18 Kohlenstoffatomen, vorzugsweise Methyl oder für einen araliphatischen Kohlenwasserstoffrest mit 6 bis 10 Kohlenstoffatomen vorzugsweise Phenyl oder Naphthyl im Arylteil und 1 bis 14 Kohlenstoffatomen im aliphatischen Teil steht,

enthält, wobei der Anteil der Komponente (a) an Z 0 bis 40 Gew.-% vorzugsweise 0 bis 20 Gew.-% beträgt, und der Anteil der Komponente (b) an Z 60 bis 100 Gew.-% vorzugsweise 80 bis 100 Gew.-% beträgt, und die Komponenten (a) und (b) sowohl statistisch verteilt als auch in Blöcken angeordnet sein können,

X für -NH-, -O- oder $-(CH_2)_{1-4}$, vorzugsweise für -NH- steht,

l für 5 bis 60, vorzugsweise für 25 bis 50 steht,

m für 4 oder 5 steht, und

n für 1, 2, 3,4 oder 5 steht.

Die Erfindung betrifft weiterhin wäßrige Dispersionen der erfindungsgemäßen Polyetherester-modifizierten Polyurethanionomere sowie Mischungen dieser Dispersionen mit Perfluoralkylgruppen enthaltenden Polymeren und die Verwendung dieser Mischungen als Hydrophobierungs- und Oleophobierungsmittel.

Die Herstellung der erfindungsgemäßen Polyetherester-modifizierten Polyurethanionomere erfolgt beispielsweise durch Umsetzung eines Polyurethan-Grundgerüstes, aufgebaut aus difunktionellen organischen Polyisocyanaten mit Acylharnstoffgruppen der Formel

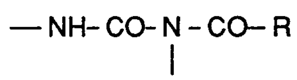

(III),

wobei

R für einen gesättigten oder ungesättigen einwertigen aliphatischen Kohlenwasserstoffrest mit bis zu 35 Kohlenstoffatomen, vorzugsweise mit 9 bis 22 Kohlenstoffatomen, oder einen einwertigen aromatischen Kohlenwasserstoffrest mit 6 bis 10 Kohlenwassserstoffatomen oder einen einwertigen araliphatischen Kohlenwasserstoffrest mit 7 bis 10 Kohlenstoffatomen steht, wobei bei Vorliegen von mehreren Resten R im gleichen Molekül gleichzeitig unterschiediche Reste R vorliegen können,

im Polyurethan-Grundgerüst, das vorzugsweise noch keine ionomere Gruppen enthält, mit einem Polyetherestermonool der Formel (II)

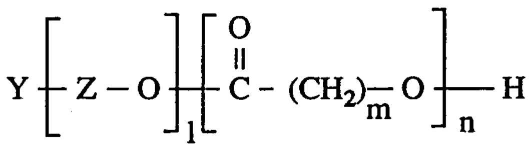

(II)

in welcher

Y, Z, l, m und n die oben angegebene Bedeutung haben,

und, für den Fall, daß noch keine ionischen Gruppen vorliegen, anschließender Einführung der ionischen Gruppen durch Reaktion eines Ionenträgers oder einer in eine ionische Gruppe überführbare Verbindung mit wenigstens einer weiteren gegen Isocyanat reaktiven Gruppe, mit einer isocyanathaltigen Vorstufe.

Die Polyetherester-Modifizierung erfolgt vorzugsweise vor oder gleichzeitig mit der Umsetzung isocyanathaltiger Vorstufen mit isocyanatreaktiven Verbindungen A).

Das Polyurethan-Grundgerüst, ist ein Polyadditionsprodukt aus (im wesentlichen) isocyanatreaktiven Reaktionspartnern und Polyisocyanaten bzw. deren Derivaten.

Zur Herstellung des Polyurethan-Grundgerüstes können Aufbaukomponenten aus der Reihe der

A) isocyanatreaktiven Verbindungen und

B) organischen Diisocyanate

verwendet werden.

Als isocyanatreaktive Verbindungen A) kommen höhermolekulare Polyhydroxylverbindungen des Molekulargewichtsberiches von 500 bis 10 000, vorzugsweise 500 bis 5000 aus den Gruppen der Polyether, -ester, -lactone und/oder -carbonate in Frage, wie sie z.B. in DAS 1 770 068, S. 11-14, beschrieben wurden.

Weiterhin kommen als isocyanatreaktive Verbindungen A) mehrwertige Alkohole und/oder Amine des Molekulargewichtsbereichs von 18 bis 500, bevorzugt 18 bis 300 in Frage, wie beispielsweise

1. übliche gesättigte oder ungesättigte Diole, wie Ethylenglykol und seine Kondensate, Butandiol-1,3, Butandiol-1,4, Butendiol-1,4, Propandiol-1,2, Propandiol-1,3, 2,2-Dimethyl-propandiol-1,3 (Neopentylglykol), 1,6-Hexandiol, 1,4-Bishydroxymethyl-cyclohexan, Ethoxylierungsprodukte aromatischer Polyole wie z.B. Hydrochinon oder 4,4'-Dihydroxy-diphenylpropan-(2,2), niedermolekulare Ester wie z.B. Terephthalsäure-bis-glykolester, Bernsteinsäure-di-β-hydroxyethylamid, Di-, Tri- oder Tetrapropylenglykol etc.,
2. aliphatische, cycloaliphatische und aromatische Polyamine, wie z.B. Ethylendiamin, Hexamethylendiamin, Hydrazin, Adipinsäuredihydrazid, Piperazin, 1-Amino-3,3,5-trimethyl-5-aminomethyl-cyclohexan (Isophorondiamin) oder Diethylentriamin,
3. Aminoalkohole wie Ethanolamin, Propanolamin, N-Methylethanolamin Diethanolamin etc.,
4. Wasser.

Als organische Isocyanate B) kommen difunktionelle organische Polyisocyanate, wie sie z.B. von W. Siefken in Justus Liebigs Annalen der Chemie, 562, S. 75-136, beschrieben werden, in Frage. Bevorzugt Verwendung finden z.B. 1,6-Hexamethylendiisocyanat, 1,4-Diisocyanatocyclohexan, 1-Isocyanato-3,3,5-trimethyl-5-isocyanatomethyl-cyclohexan (Isophorondiisocyanat), 4,4'-Diisocyanato-dicyclohexylmethan, Xylylendiisocyanat, 4,4'-Diisocyanato-dicyclohexyl-propan-(2,2), 1,4-Diisocyanatobenzol, 2,4-Diisocyanatotoluol, 2,6-Diisocyanatotoluol, 4,4'-Diisocyanato-diphenyl-methan, 2,4'-Diisocyanato-diphenyl-methan, sowie aus diesen Verbindungen bestehende Gemische.

Es ist selbstverständlich auch möglich, als Aufbaukomponente B) die in der Polyurethanchemie an sich bekannten modifizierten, beispielsweise Carbodiimidgruppen, Oxadiazintriongruppen, Uretdiongruppen, Allophanatgruppen, Isocyanuratgruppen, Urethangruppen und/oder Biuretgruppen aufweisende Polyisocyanate (mit)zuverwenden.

Gegebenenfalls können als Aufbaukomponente B) auch Monoisocyanate wie z.B. Phenylisocyanat, Hexylisocyanat, Dodecyl- oder Stearylisocyanat in untergeordneter Menge mitverwendet werden.

Das Polyurethan-Grundgerüst enthält Acylharnstoffgruppen der Formel

$$-NH-CO-\underset{|}{N}-CO-R \qquad (III)$$

wobei

R für einen gesättigten oder ungesättigten, einwertigen, aliphatischen Kohlenwasserstoffrest mit bis zu 35 Kohlenstoffatomen, vorzugsweise mit 9 bis 22 Kohlenstoffatomen oder einen einwertigen, aromatischen Kohlenwasserstoffrest mit 6 bis 10 Kohlenstoffatomen oder einen einwertigen, araliphatischen Kohlenwasserstoffrest mit 7 bis 10 Kohlenstoffatomen steht,
wobei bei Vorliegen von mehreren Resten R im gleichen Molekül gleichzeitig unterschiedliche, der genannten Definition entsprechende, Reste vorliegen können,

deren Menge so bemessen wird, daß sie in dem Polyisocyanat-Additionsprodukt mit 0,1 bis 20 Gew.-%, bezogen auf Feststoff-Anteil, in Form der genannten Acylharnstoffgruppen bildenden Struktureinheit der Formel

$$-NH-CO-\underset{|}{N}-CO- \qquad (IV)$$

vorliegen.

Die Einführung der Acylharnstoffgruppen der Formel (III) in das Polyurethan-Grundgerüst erfolgt beispielsweise durch Verwendung von Aufbaukomponenten B), die Carbodiimidgruppen enthalten, und anschließende Addition von Monocarbonsäuren der Formel

R-COOH (V)

worin

R die oben angegebene Bedeutung hat.

Vorzugsweise werden die Carbodiimidgruppen vor oder während der Polyaddition durch partielle Carbodiimidisierung von Aufbaukomponenten B) in Gegenwart eines Phosphor-organischen Katalysators in an sich bekannter Weise (vgl. Angew. Chem. 74, 801-806 (1962)) erzeugt die resultierenden Carbodiimidgruppen-haltigen Zwischenprodukte mit Aufbaukomponenten A zur Reaktion gebracht und anschließend die Carbodiimidgruppen mit Monocarbonsäuren der Formel (V) in Acylharnstoffgruppen der Formel (III) überführt.

Beispiele für Carbonsäuren der Formel (V) sind 2-Ethylhexan-, Dekan-, Dodekan-, Myristin-, Palmitin-Stearin-, Behen-, Öl-, Linolen-, Linolsäure, weiterhin Benzoe-, Zimt- und Naphthoesäure.

Die Carbonsäuren können auch als Gemische, wie sie aus natürlichen Rohstoffen gewonnen werden, wie z.B. Cocusnuß- oder Fischölfettsäuren, eingesetzt werden.

Aus diesen modifizierten Polyurethan-Grundgerüsten aufgebaute Polyetherester-modifizierte Polyurethanionomere eignen sich besonders gut für die Mischungen mit Perfluoralkylgruppen enthaltenden Polymeren, die als Hydrophobierungs- und Oleophobierungsmittel Verwendung finden.

Die bei der Herstellung der erfindungsgemäßen Polyetherester-modifizierten Polyurethanionomere verwendeten Polyetherestermonoole der Formel

$$Y\left[Z-O\right]_l\left[\overset{\overset{\displaystyle O}{\|}}{C}-(CH_2)_m-O\right]_n H \qquad (II)$$

in welcher

Y, Z, l, m und n die oben angegebene Bedeutung haben,

können erhalten werden, indem man Polyethermonoole der Formel

$$Y\left[Z-O\right]_l H \qquad (VI)$$

in welcher

Y, Z und l die oben angegebene Bedeutung haben,

in an sich bekannter Weise mit Lactonen, wie z.B. Valerolacton, ε-Caprolacton oder mit Gemischen dieser Lactone verestert.

Die Umsetzung kann, je nach Art des eingesetzten Katalysators (z.B. $BF_3$-Etherat, Zinnaktivatoren nach US 3 284 417) in Temperaturbereichen zwischen 50 und 250 °C durchgeführt werden. Bevorzugt sind jedoch Umsetzungen oberhalb von 150 °C ohne Katalysatorzusatz.

Die Polyetherester-Modifizierung von Polyurethanionomeren bzw. Polyurethanionomervorstufen zu erfindungsgemäßen Polyetherester-modifizierten Polyurethanionomeren erfolgt vorzugsweise durch Addition der Polyetherestermonoole (II) an Isocyanatgruppen, die end- und/oder seitenständig am Polyurethangerüst vorliegen.

Die erfindungsgemäßen Polyetherester-modifizierten Polyurethanionomere können sowohl anionischen als auch kationischen Charakter haben, wobei kationischer Charakter bevorzugt ist. Die Einführung der ionischen Gruppen erfolgt bevorzugt durch Reaktion eines Ionenträgers oder einer in eine ionische Gruppe überführbaren Verbindung mit wenigstens einer weiteren gegen Isocyanat reaktiven Gruppe mit einem isocyanathaltigen Prepolymer zum erfindungsgemäßen Polyetherester-modifizierten Polyurethanionomer.

Als anionische Gruppen finden bevorzugt Carboxylat- und/oder Sulfonatgruppen Verwendung. Zu den anionische Gruppen aufweisenden Verbindungen oder deren Vorläufern zählen beispielsweise Sulfonatgruppen aufweisende aliphatische Diole gemäß DE-OS 2 446 440 oder DE-OS 2 437 218, Carboxylatgruppen oder in Carboxylatgruppen überführbare Carboxylgruppen aufweisende Diole und/oder Diaminosulfonate der in CA-PS 928 323 beschriebenen Art, wie z.B. das Natriumsalz der N-(2-Aminoethyl)-2-aminoethansulfonsäure, die Dimethylolpropionsäure oder deren Salze oder das Natriumsalz der N-(2-Aminoethyl)-2-propionsäure.

Potentiell ionische Gruppen können vor oder gleichzeitig mit der Vermischung des Polyurethans mit Wasser durch Zusatz entsprechender Neutralisationsmittel wie z.B. tertiärer Amine wie z.B. Triethylamin, Trisisopropylamin oder mittels anorganischer Basen wie z.B. Natronlauge oder Ammoniak ganz oder teilweise in entsprechende ionische Gruppen überführt werden.

Die Dispersionen der bevorzugten kationomeren Polyetherester-modifizierten Polyurethanionomere werden z.B. durch Mitverwendung von tertiären Stickstoff enthaltenden Hydroxyl- und/oder Aminkomponenten wie z.B. N-Methyldiethanolamin, N-Ethyldiethanolamin oder höhere Homologe mit einer Alkylgruppe mit mehr als 2 C-Atomen oder N-Methyldiisopropanolamin, N,N'-Dihydroxyethyl-piperazin,Triethanolamin, Trisisopropanolamin, N,N-Dimethylethanolamin oder N-Methyl-bis(3-aminopropyl)-amin oder N-Methyl-bis-(2-aminoethyl)-amin die vor oder gleichzeitig mit der Vermischung des Polyetherester-modifizirten Polyurethans mit Wasser durch Umsetzung mit anorganischen oder organischen Säuren wie z.B. HCl, Essigsäure, Milchsäure, Cyanessigsäure, Phosphorsäure oder Schwefelsäure oder durch Umsetzung mit Quaternierungsmitteln wie z.B. Dimethylsulfat, Benzylchlorid, Bromacetamid oder Chloracetamid zu den entsprechenden Ammoniumverbindungen erhalten.

Gegebenenfalls können kationische Gruppen auch in Form von end- und/oder seitenständig ins Polymer eingebauten sekundären oder primären Amine, die durch Quaternierung oder Protonierung mittels oben beispielhaft genannter Quarternierungs- und/oder Protonierungsmittel in entsprechende Ammoniumionen überführt werden, ins Polyurethan eingeführt werden.

Werden bei der Herstellung der erfindungsgemäßen Polyetherester-modifizierten Polyurethanionomere Polyethermonoole der Formel (VI) eingesetzt, in welcher

Y für

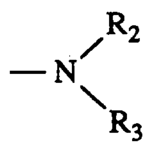

steht,

worin

$R_2$ und $R_3$ die oben angegebene Bedeutung haben,

so stellen diese tertiären Aminogruppen ebenfalls potentielle kationische Gruppen dar.

Die Herstellung der erfindungsgemäßen Polyetherester-modifizierten Polyurethanionomere und deren wäßrige Dispersionen kann in an sich bekannter Weise (vgl. beispielsweise Houben-Weyl, Methoden der organischen Chemie; Bd. E20, S. 1673-1681 (1987) Georg Thieme Verlag, Stuttgart-New York) erfolgen.

Vorzugsweise wird zunächst ein Diisocyanat unter Katalyse mit z.B. einem technischen Gemisch an 1-Methyl-1-phospha-2-cyclopenten-1-oxid und 1-Methyl-1-phospha-3-cyclopentan-1-oxid bis zu einem gewünschten Gehalt an Carbodiimidgruppen carbodiimidisiert.

Das resultierende Carbodiimidgruppen-haltige Diisocyant wird anschließend in an sich bekannter Weise des Molekulargewichtsbereichs größer 500 und/oder isocyanatreaktiven Reaktionspartnern des Molekulargewichtsbereiches 18 bis 500 zu einem isocyanat- oder hydroxyfunktionellen Prepolymeren umgesetzt. Die Polyetherester-Modifizierung des Polyurethangrundgerüstes durch Addition von Polyetherestermonool (II) an Isocyanatgruppen erfolgt vorzugsweise vor oder gleichzeitig mit Umsetzung des Carbodiimidgruppen-haltigen Diisocyanates mit isocyanatreaktiven Komponenten A).

In einer weiteren bevorzugten Ausführungsform erfolgt die Addition von Polyetherestermonool (II) vor der Carbodiimidisierung durch Umsetzung von Polyetherestemonool (II) mit Diisocyanaten.

Die Carbodiimigruppen des resultierenden Prepolymeren werden durch Umsetzung mit oben genannten Monocarbonsäuren (V) in Acylharnstoffgruppen (III) überführt.

Das resultierende Prepolymere wird anschließend im Falle eines hydroxy-funktionellen Prepolymeren durch Umsetzung mit Diisocyanaten in ein isocyanatfunktionelles Prepolymer überführt.

Durch Umsetzung mit einem isocyanatreaktive Gruppen enthaltenden Ionenträger oder einer in ionische Gruppen überführbaren Verbindung und gegebenenfalls anschließender Überführung in ionische Gruppen werden erfindungsgemäße Polyetherester-modifizierten Polyurethanionomere erhalten. Die resultierenden erfindungsgemäßen Polyetherester-modifizierten Polyurethanionomeren können anschließend durch Zusatz von entsprechenden Mengen Wasser in wäßrige Dispersionen mit einem Feststoffgehalt von 10 bis 60 Gew.-%, bevorzugt 20 bis 40 Gew.-% Feststoff überführt werden.

Zur Einstellung einer günstigen Viskosisät kann in beliebigem Stadium des Polymeraufbaus ein Lösungsmittel wie z.B. Aceton, Methylethylketon, Tetrahydrofüran, N-Methylpyrrolidon, Propylglykoldiacetat oder Methoxypropylacetat mitverwendet werden. Vorzugsweise wird Aceton als Hilfsmittel verwendet, welches aus der wäßrigen Dispersion erfindungsgemäßer Polyetherester-modifizierter Polyurethanionomere mittels Vakuumdestillation leicht entfernt werden kann.

Die Mischungen der erfindungsgemäßen Polyetherester-modifizierten Polyurethanionomer-Dispersionen mit Perfluoralkylgruppen enthaltenden Polymeren dienen insbesondere als Textilausrüstungsmittel für die Hydro- und Oleophobierung von Textilien. Sie können als wäßrige Dispersionen mit einem Feststoffgehalt von 10 bis 50 Gew.-%, vorzugsweise 15 bis 40 Gew.-% vorliegen.

Geeignete Perfluoralkylgruppen enthaltende Polymere sind handelsübliche Perfluoralkylpolymere aus der Reihe der perfluoralkylgruppenhaltigen Vinyl-, Styrol-, Vinyliden-, Acryl-, Methacryl- und α-Chloracrylpolymeren mit jeweils 4 bis 20 C-Atomen im Perfluoralkylmonomer. Beispiele für diese Produkte sind Polymerisate und Copolymerisate von folgenden Verbindungen:

$C_5F_{11}CH_2O_2CC(CH_3)=CH_2$
$C_7F_{15}CH_2O_2CC(CH_3)=CH_2$
$C_9F_{19}CH_2O_2CCH=CH_2$
$C_8F_{17}SO_2N(C_2H_5)C_2H_4O_2CC(CH_3)=CH_2$
$C_8F_{17}SO_2N(CH_3)C_2H_4O_2CCH=CH_2$
$C_8F_{17}CON(C_2H_5)C_2H_4O_2CC(CH_3)=CH_2$
$C_8F_{17}C_2H_4O_2CC(CH_3)=CH_2$
$C_8F_{17}SO_2N(CH_3)COC(CH_3)=CH_2$
$C_8F_{17}C_2H_4O_2CCH=CHCO_2C_2H_4C_8H_{17}$
$C_8F_{17}SO_2N(C_3H_7)C_2H_4OCOCH=CH_2$
$C_8F_{17}SO_2N(CH_3)C_{11}H_{22}OCOCH=CH_2$
$C_8F_{17}SO_2N(CH_3)C_{10}H_{20}OCOCH=CH_2$
$C_8F_{17}SO_2N(CH_3)C_{11}H_{22}OCO(CH_3)=CH_2$
$C_5F_{11}CH_2OCOC(CH_3)=CH_2$
$C_7F_{15}CH_2OCOC(CH_3)=CH_2$
$C_8F_{17}SO_2N(C_2H_5)C_2H_4COOCH=CH_2$
$C_7F_{15}C_3H_6COOCH=CH_2$
$C_4F_9COOCH_2CH=CH_2$
$C_8F_{17}SO_2N(C_2H_5)COCH=CH_2$
$C_7F_{15}CH_2O_2CCH=CHCO_2CH_2C_7F_{15}$
$C_3F_7CH_2O_2CCF=CH_2$
$C_3F_7CH_2O_2CCF=CF_2$
$(C_3F_7)_3CCH_2O_2CCH=CH_2$
$C_8F_{17}(CH_2)_3O_2CCH=CH_2$
$C_6F_{17}COCH_2CH_2CH_2O_2CCH=CH_2$
$C_8F_{17}(CH_2)_{11}O_2CC(CH_3)=CH_2$
$C_8F_{17}SO_2CH_2CH_2O_2CCH=CH_2$
$C_8F_{17}SOCH_2CH_2O_2CCH=CH_2$
$C_8F_{17}CON(C_2H_5)(CH_2)_2O_2CC(CH_3)=CH_2$
$C_{12}F_{25}SO_2NH(CH_2)_{11}O_2CC(CH_3)=CH_2$
$C_{12}F_{25}SO_2C_6H_4CH=CH_2$
N-Butylperfluoroctansulfonamidoethylacrylat,
N-Ethylperfluoroctansulfonamidoethylmethacrylat,
N-Methylperfluorbutansulfonamidobutylacrylat,
N-Ethylperfluoroctansulfonamidoethyl-α-chloracrylat,
1,1-Dihydroperfluorhexylacrylat,
1,1-Dihydroperfluordecylmethacrylat,
1,1-Dihydroperfluoroctyl-ω-chloracrlyat,
3-(Perfluoroctyl)-propylacrylat,
2-(Perfluorheptyl)-ethylmethacrylat,
11-(Perfluoroctyl)-undecylacrylat und
3-(Perfluorheptyl)-propylchloracrylat.

Bevorzugt sind Acrylat-(co)polymere mit einem Fluorgehalt von 20 bis 45, insbesondere 35 bis 45 Gew.-%, bezogen auf Feststoff.

Das Mischungsverhältnis von Polyetherester-modifizierten Polyurethanionomer zu Perfluoralkylgruppen enthaltendem Polymer beträgt beispielsweise 1:0,5 bis 1:10, insbesondere 1:1 bis 1:5, bezogen auf das Gewicht und auf Feststoffgehalt.

Die erfindungsgemäßen wäßrigen Dispersionen können weitere Bestandteile wie andere Textilhilfsmittel, z.B. Kunstharze, enthalten.

Bevorzugt sind diese weiteren Bestandteile nichtionischer oder kationischer Natur.

Die wäßrigen Dispersionen der erfindungsgemäßen Mischungen werden vorzugsweise vor der Anwendung auf den Textilmaterialien mit Wasser verdünnt. Die Anwendungsmengen werden so gewählt, daß daraus eine Auflagemenge von 0,5 bis 15 g, vorzugsweise 0,5 bis 8 g Feststoff der erfindungsgemäßen Substanz pro kg Textilmaterial erzielt wird.

Mit den erfindungsgemäßen Mischungen können natürliche und synthetische Materialien wie Fasern, Filamente, Garne, Vliese, Gewebe, Gewirke und Gestricke aus insbesondere Cellulose und ihren Derivaten aber auch aus Polyester-, Polyamid- und Polyacrylnitrilmaterialien, Wolle oder Seide erfolgreich ausgerüstet werden.

Die hydrophobierten bzw. oleophobierten textilen Gebilde, etwa Vliese oder insbesondere Gewebe finden z.B. Einsatz zur Herstellung von Regenschirmbespannungen, Zelten, wasserabweisenden Bekleidungen oder Bezügen, Ballonhüllen, Markisen, textilen Bodenbelägen, Verpackungsmaterialien oder Schuhwerk.

Die Ausrüstung kann nach bekannten Verfahren, vorzugsweise nach dem Auszieh- oder Foulardverfahren beispielsweise zwischen Raumtemperatur und 40 °C, aber auch durch Pflatschen oder Besprühen mit einer nachgeschalteten Temperaturbehandlung bei 80 bis 180 °C, vorzugsweise 120 bis 150 °C erfolgen.

Die in den folgenden Beispielen angegebenen Teile und Prozente beziehen sich auf das Gewicht, sofern nichts anderes vermerkt ist.

Bevorzugte Polyetherester-modifizierte Polyurethanionomere besitzen mittlere Teilchendurchmesser größer 30 nm, vorzugsweise 35 bis 300 nm und insbesondere 50 bis 150 nm.

Die Bestimmung der mittleren Teilchengrößen wäßriger Dispersionen erfolgte mittels Laser-Korrelations-Spektroskopie (Malvern Autosizer II, Malvern Inst. Limited).

Beispiel 1

(Herstellung eines Polyetherestermonools der Formel (II)

In einem 100-l-Rührwerkbehälter werden 75 kg eines monofunktionellen Polyethers der OH-Zahl 25, welcher durch Addition von 63 Gew.-% Ethylenoxid und 16 Gew.-% Propylenoxid als Mischblock und anschließender Addition von 21 Gew.-% Ethylenoxid an Glycol-monobutylether erhalten wurde und 7,98 kg $\epsilon$-Caprolacton vorgelegt und 12 h bei 200 °C gerührt. Das erhaltene Polymerisat hat folgende analytische Daten:

| | |
|---|---|
| OHZ: | 22 (in mg KOH/g) |
| $\eta$25 °: | 680 mPas |

Beispiel 2

(Herstellung einer wäßrigen Dispersion eines erfindungsgemäßen Polyetherestermodifizierten Polyurethanionomers)

296 g eines Gemisches aus 2,4-Toluylen-diisocyanat und 2,6-Toluylen-diisocyanat werden mit 0,3 g einer 20 %igen Lösung eines Gemisches aus 1-Methyl-1-phospha-2-cyclopenten-1-oxid und 1-Methyl-1-phospha-3-cyclopenten-1-oxid in N-Methylpyrrolidon bei 60 bis 65 °C carbodiimidisiert. Bei einem Isocyanatgehalt von 20 bis 21 % werden nacheinander 0,3 g Phosphortrichlorid, 153 g Ethylenoxidträger nach Beispiel 1 und 95,8 g 1,4-Butandiol zugegeben. Das resultierende hochviskose Prepolymer wird in 1,02 kg Aceton gelöst. Zur 50 bis 60 °C heißen Prepolymerlösung werden 215 g Stearinsäure und 30 Minuten später 127 g eines Gemisches aus 2,4-Toluylen-diisocyanat und 2,6-Toluylen-diisocyanat zugegeben. Das Isocyanatendständige Prepolymer wird durch Umsetzung mit 23,5 g N-Methyldiethanolamin kettenverlängert und mit einer Lösung von 20 g Milchsäure in 2,05 kg entionisiertem Wasser dispergiert.

Nach Entfernen des Acetons mittels Vakuumdestillation erhält man eine stabile Dispersion mit folgenden Daten:
Feststoff: 30,5 %.
mittlere Teilchengröße: 66 nm.
Viskositat: 17 s (DIN 4 mm) (entsprechend einer Auslaufzeit von 17 Sekunden, bestimmt nach DIN 53 211 im DIN-Becher 4 mm)

Beispiel 3 (Vergleich)

Kationisch modifiziertes Polyurethan wäßrige kationisch modifizierte PU-Dispersion gemäß DE-A 3 523 856 (Beispiel 1).

Eine Mischung aus 2,4-Toluylen-diisocyanat und 2,6-Toluylen-diisocyanat wird mit einer Lösung eines Gemisches aus 1-Methyl-1-phospha-2-cyclopenten-1-oxid und 1-Methyl-1-phospha-3-cyclopenten-1-oxid in N-Methylpyrrolidon carbodiimidisiert. Bei einem NCO-Wert von 20,6 % wird die Reaktion mit Phosphortrichlorid abgebrochen. Anschließend werden Butandiol-1,4 sowie Aceton zugegeben. Nach 30 Minuten ist der NCO-Wert auf 0 % gefallen. Dann wird Stearinsäure zugegeben und 40 Minuten bis zu einer Säurezahl von 0 gerührt. Danach werden weitere Teile einer Mischung aus 2,4-Toluylen-diisocyanat und 2,6-Toluylen-diisocyanat zugegeben und zu einem NCO-Wert von 8,0 % zur Reaktion gebracht. Es wird mit Aceton verdünnt und mit N-Methyldiethanolamin sowie mit n-Butanol versetzt. Bei einem NCO-Wert von 0 % wird mit DL-Milchsäure versalzt und danach mit Wasser dispergiert. Nach destillativer Entfernung des Acetons unter vermindertem Druck erhält man eine stabile Dispersion mit folgenden Daten:
Feststoff: 31,0 %
Viskosität: 22 s (DIN 4 mm)
mittlere Teilchengröße: 40 nm

Beispiel 4 (Vergleich)

Kationisch-nichtionisch-modifiziertes Polyurethan gemäß Beispiel 6 aus DE-A 3 523 856

174 Teile (1,0 Mol) einer Mischung aus 2,4-Toluylen-diisocyanat und 2,6-Toluylen-diisocyanat (Verhältnis 65:35) werden mit 0,2 ml einer Lösung eines Gemisches aus 1-Methyl-1-phospha-2-cyclopenten-1-oxid und 1-Methyl-1-phospha-3-cyclopenten-1-oxid in N-Methyl-pyrrolidon (1:6) als Katalysator bei 60 °C carbodiimidisiert. Bei einem NCO-Wert von 27,7 % wird die Reaktion mit 0,2 ml Phosphortrichlorid abgebrochen und 30 Minuten nachgerührt. Es stellt sich ein konstanter NCO-Wert von 25,8 % ein. Das Reaktionsprodukt wird mit 101,8 Teilen (0,36 Mol) Stearinsäure bei 60 °C versetzt und 2 Stunden zur Reaktion gebracht. Das entstandene acylierte Harnstoffgruppen aufweisende Reaktionsprodukt hat einen NCO-Wert von 16,6 %.
100 Teile (0,117 Mol) eines Polyesterdiols aus Adipinsäure und Hexandiol (OH-Zahl 133,6) sowie 12 Gew.-Teile eines auf Butanol gestarteten Polyethylenoxid-polypropylenoxid-polyethers (OH-Zahl: 26; 73,3 % Ethylenoxid) werden 30 Minuten bei 110 °C im Wasserstrahlvakuum entwässert. Es wird auf 80 °C abgekühlt und mit 32,1 Teilen (0,145 Mol) "Isophorondiisocyanat" (3-Isocyanatomethyl-3,5,5-trimethylcyclohexylisocyanat) sowie 78,9 Teilen (0,145 Mol) des obengenannten, acylierte Harnstoffgruppen aufweisenden Polyisocyanats versetzt und die Temperatur auf 100 °C erhöht. Es stellt sich ein konstanter NCO-Wert von 3,4 % ein. Anschließend werden 4,2 Gew.-Teile n-Butanol zugegeben und mit 900 ml Aceton verdünnt, wobei die Temperatur auf 50 °C gesenkt wird. Bei 50 °C wird mit 1,1 Teilen (0,022 Mol) Hydrazinhydrat und nach 5 Minuten mit 6,37 Teilen (0,044 Mol) N,N-Bis-(3-aminopropyl)-methylamin in 50 Teilen Aceton kettenverlängert. Nach 10 Minuten wird mit 3,95 Teilen (0,044 Mol) DL-Milchsäure in 20 Teilen Wasser versalzt und nach weiteren 10 Minuten mit 550 Teilen Wasser dispergiert. Das Aceton wird unmittelbar anschließend im Vakuum abgezogen. Man erhält eine feinteilige Dispersion mit folgenden Daten:
Feststoff: 30,0 %
Viskosität: 18 s (DIN 4 mm)
mittlere Teilchengröße: 80 nm.

Beispiel 5 (Elektrolytstabilität)

Jeweils 20 g Polyurethandispersion gemäß Beispiel 2 bis 4 werden mit 1.000 g 0,6 %iger wäßriger Zinknitrat-Lösung verdünnt und 8 Stunden bei Raumtemperatur gelagert. Nach dieser Zeit wird die Stabilität der Lösung optisch beurteilt.

| | Stabilität |
|---|---|
| Beispiel 2 | leicht opaleszierende Lösung |
| Beispiel 3 | starke Ausfällung |
| Beispiel 4 | leicht opaleszierende Lösung |

Beispiel 6 (Anwendungsbeispiel)

Für die Flächenstabilisierung der Textilsubstrate aus Baumwolle und Baumwolle/-Synthesefasern bzw. zur Griffgestaltung von Polyacrylat-Markisenstoffen werden handelsübliche Kunstharze und entsprechende Katalysatoren mitverwendet.

Kunstharz X: Fixapret CPN® (Methylolierungsprodukt von Glyoxalmonourein)
Katalysator: Zinknitrat
Komponente II: wäßrige Dispersionen eines Perfluoralkylengruppen enthaltenden Acrylat-Copolymeren mit einem Fluorgehalt von ca. 40 Gew.-% im Feststoff und einem Feststoffgehalt von ca. 15 Gew.-% bezogen auf Gesamtdispersion (z.B. Baygard ® CA 40 083, Bayer AG).

Ein Baumwoll-Gabardinegewebe mit einem $m^2$-Gewicht von ca. 240 g wurde jeweils mit den Formulierungen A), B) und C) ausgerüstet:

| | A) (erfindungsgemäß) | B) | C) | [ ] |
|---|---|---|---|---|
| Kunstharz X | 60 | 60 | 60 | g/l |
| Katalysator | 4 | 4 | 4 | g/l |
| Komponente II | 20 | 20 | 20 | g/l |
| Beispiel 2 (erfindungsgemäß) | 10 | - | - | g/l |
| Beispiel 3 | - | 10 | - | g/l |
| Beispiel 4 | - | - | 10 | g/l |

Die Baumwollware wurde in einem Chassis mit den Flotten getränkt und zwischen 2 Gummiwalzen (Foulard) abgequetscht. Die Flottenaufnahme betrug 70 %, bezogen auf das Textilgewicht. Die Muster wurden bei 100 °C getrocknet und während 5 Minuten bei 150 °C kondensiert.

Die Prüfung der ausgerüsteten Ware erfolgte nach folgender Methode:
Nach einer 24-stündigen Klimatisierung bei 20 °C ± 2 °C und 65 % relativer Luftfeuchtigkeit werden die ausgerüsteten Textilmuster den entsprechenden Prüfungen unterzogen:

1. Beregnungsprüfung erfolgt in Anlehnung an DIN 53 888 mit dem Beregnungsprüfgerät nach Dr. Bundesmann.

Bewertung
- Abperlzeit in Minuten
- Abperleffekt in Noten 5-1
  Note 5 bedeutet höchster Abperleffekt
  Note 1 bedeutet geringster Abperleffekt
- Wasseraufnahme

2. Der Ölabweisungstest erfolgt in Anlehnung an AATCC Test Method 118-1978.

Die Note für die Ölabweisung entspricht der am höchsten numerierten Testflüsigkeit, die das Fasermaterial innerhalb 30 Sekungen nicht benetzt:
Note 1 niedrigster Wert
Note 8 höchster Wert.

Die Prüfung ergab folgende Werte:

| | | A) (erfindungsgemäß) | B) | C) |
|---|---|---|---|---|
| 1. | Abperlzeit [min] | 10 | 10 | 10 |
| | Abperleffekt (Note 5-1) | 5 | 5 | 5 |
| | Wasseraufnahme [%] | 2,9 | 2,0 | 2,9 |
| 2. | Ölabweisung (Note 8-1) | 4 | 4 | 4 |

Beispiel 7 (Anwendungsbeispiel Permanenz)

Die unter Beispiel 6 ausgerüsteten Baumwollmuster wurden 5 mal bei 40 °C auf einer Miele-Waschmaschine Typ W 763 mit Pflegeleichtprogramm unter Zusatz eines haushaltsüblichen Waschmittels gewaschen und bei 80 °C in einem Miele-Haushaltstrockner getrocknet.

Die Prüfung ergab folgende Werte:

| | | A) (erfindungsgemäß) | B) | C) |
|---|---|---|---|---|
| 1. | Abperlzeit [min] | 10 | 10 | 0 |
| | Abperleffekt (Note 5-1) | 5 | 5 | 1 |
| | Wasseraufnahme [%] | 7,8 | 6,9 | 34 |
| 2. | Ölabweisung (Note 8-1) | 3 | 3 | 2-3 |

**Patentansprüche**

**1.** In Wasser dispergierbare Polyetherester-modifizierte Polyurethanionomere, aufgebaut aus difunktionellen organischen Polyisocyanaten mit Acylharnstoffgruppen der Formel

—NH-CO-N-CO-R (III),

wobei

R für einen gesättigten oder ungesättigen einwertigen aliphatischen Kohlenwasserstoffrest mit bis zu 35 Kohlenstoffatomen, vorzugsweise mit 9 bis 22 Kohlenstoffatomen, oder einen einwertigen aromatischen Kohlenwasserstoffrest mit 6 bis 10 Kohlenwassserstoffatomen oder einen einwertigen araliphatischen Kohlenwasserstoffrest mit 7 bis 10 Kohlenstoffatomen steht, wobei bei Vorliegen von mehreren Resten R im gleichen Molekül gleichzeitig unterschiediche Reste R vorliegen können,

im Polyurethan-Grundgerüst, mit einem Gehalt an ionogenen Gruppen von 10 bis 100 Milliäquivalenten pro 100 g Ionomer und einem Gehalt an Polyetheresterresten von 2 bis 40 Gew.-% und einem Gehalt an Ethylenoxideinheiten von 1 bis 35 Gew.-%, jeweils bezogen auf Polyetherester-modifiziertes Polyurethanionomer, worin das Polyetherester-modifizierte Molekülteil der allgemeinen Formel

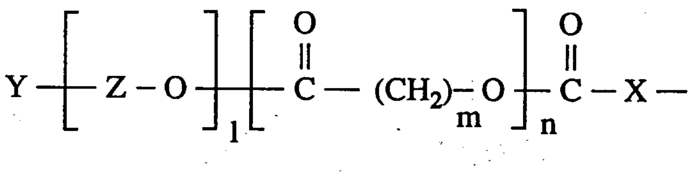 (I)

entspricht, in welcher

Y für $R_1$-O- oder

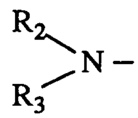

steht,

worin

$R_1$ für einen gesättigten aliphatischen Kohlenwasserstoffrest mit 1 bis 24 Kohlenstoffatomen, welcher gegebenenfalls durch 1 oder 2 Sauerstoffatome unterbrochen ist; einen ungesättigten aliphatischen Kohlenwasserstoffrest mit 2 bis 24 Kohlenstoffatomen; einen gesättigten oder ungesättigten cycloaliphatischen Kohlenwasserstofferest mit 3 bis 8 Kohlenstoffatomen welcher gegebenenfalls 1 bis 3 Heteroatome aus der Reihe Sauerstoff, Schwefel, Stickstoff enthält; einen aromatischen Kohlenwasserstoffrest mit 6 bis 10 Kohlenstoffatomen; einen araliphatischen Kohlenwasserstoffrest mit 6 bis 10 Kohlenstoffatomen im Arylteil und 1 bis 14 Kohlenstoffatomen im aliphatischen Teil steht,

$R_2$ und $R_3$ gleich oder verschieden sind und jeweils für einen gesättigten aliphatischen Kohlenwasserstoffrest mit 1 bis 18 Kohlenstoffatomen; einen ungesättigten aliphatischen Kohlenwasserstoffrest mit 2 bis 18 Kohlenstoffatomen; einen gesättigten oder ungesättigten cycloaliphatischen Kohlenwasserstoffrest mit 3 bis 8 Kohlenstoffatomen welcher gegebenenfalls 1 bis 3 Heteroatome aus der Reihe Sauerstoff, Schwefel, Stickstoff enthält; einen aromatischen Kohlenwasserstoffrest mit 6 bis 10 Kohlenstoffatomen; einen araliphatischen Kohlenwasserstoffrest mit 6 bis 10 Kohlenstoffatomen im Arylteil und 1 bis 14 Kohlenstoffatomen im aliphatischen Teil steht,

Z die Komponenten (a) und (b)

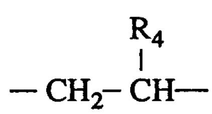 (a)

$—CH_2—CH_2—$ (b)

enthält, worin

$R_4$ für einen gesättigten aliphatischen Kohlenwasserstoffrest mit 1 bis 18 Kohlenstoffatomen oder für einen araliphatischen Kohlenwasserstoffrest mit 6 bis 10 Kohlenstoffatomen im Arylteil und 1 bis 14 Kohlenstoffatomen im aliphatischen Teil steht,

wobei der Anteil der Komponente (a) an Z 0 bis 40 Gew.-% beträgt, und der Anteil der Komponente (b) an Z 60 bis 100 Gew.-% beträgt, und

X für -NH-, -O- oder $-(CH_2)-_{1-4}$ steht

l für 5 bis 60 steht

m für 4 oder 5 steht, und

n für 1, 2, 3, 4 oder 5 steht.

**2.** Polyetherester-modifizierte Polyurethanionomere gemäß Anspruch 1, mit einem Gehalt an kationogenen Gruppen von 15 bis 50 Milliäquivalenten pro 100 g Ionomer und einem Gehalt an Ethylenoxideinheiten

von 5 bis 25 Gew.-% und einem Gehalt an Polyetheresterresten von 5 bis 35 Gew.-%, worin in Formel (I)

- $R_1$ — für einen gesättigten aliphatischen Kohlenwasserstoffrest mit 4 bis 18 Kohlenstoffatomen, welcher gegebenenfalls durch 1 oder 2 Sauerstoffatome unterbrochen ist; einen ungesättigten aliphatischen Kohlenwasserstoffrest mit 4 bis 18 Kohlenstoffatomen; einen gesättigten oder ungesättigten cycloaliphatischen Kohlenwasserstoffrest mit 5 bis 7 Kohlenstoffatomen, welcher gegebenenfalls 1 bis 3 Heteroatome aus der Reihe Sauerstoff, Schwefel, Stickstoff enthält; Phenyl oder Naphthyl; einen araliphatischen Kohlenwasserstoffrest mit Phenyl oder Naphthyl im Arylteil und 1 bis 14 Kohlenstoffatomen im aliphatischen Teil steht,
- $R_2$ und $R_3$ — gleich oder verschieden sind und jeweils für einen gesättigten aliphatischen Kohlenwasserstoffrest mit 1 bis 8 Kohlenstoffatomen; einen ungesättigten aliphatischen Kohlenwasserstoffrest mit 2 bis 8 Kohlenstoffatomen, einen gesättigten oder ungesättigten cycloaliphatischen Kohlenwasserstoffrest mit 5 bis 7 Kohlenstoffatomen, welcher gegebenenfalls 1 bis 3 Heteroatome aus der Reihe Sauerstoff, Schwefel, Stickstoff enthält; Phenyl oder Naphthyl; einen araliphatischen Kohlenwasserstoffrest mit Phenyl oder Naphthyl im Arylteil und 1 bis 14 Kohlenstoffatomen im aliphatischen Teil steht,
- Z — die Komponenten (a) und (b)

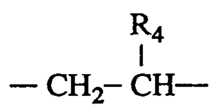 (a)

$-CH_2-CH_2-$ (b)

enthält, worin

- $R_4$ — für Methyl oder für einen araliphatischen Kohlenwasserstoffrest mit Phenyl oder Naphthyl im Arylteil und 1 bis 14 Kohlenstoffatomen im aliphatischen Teil steht,

wobei der Anteil der Komponente (a) an Z 0 bis 20 Gew.-% beträgt, und der Anteil der Komponente (b) an Z 80 bis 100 Gew.-% beträgt, und

- X — für -NH- und
- l — für 25 bis 50 stehen.

**3.** Verfahren zur Herstellung von Polyetherester-modifizierten Polyurethanionomeren des Anspruchs 1, dadurch gekennzeichnet, daß ein Polyurethan-Grundgerüst, aufgebaut aus difunktionellen organischen Polyisocyanaten mit Acylharnstoffgruppen der Formel

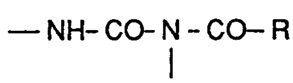 (III),

wobei

- R — für einen gesättigten oder ungesättigen einwertigen aliphatischen Kohlenwasserstoffrest mit bis zu 35 Kohlenstoffatomen, vorzugsweise mit 9 bis 22 Kohlenstoffatomen, oder einen einwertigen aromatischen Kohlenwasserstoffrest mit 6 bis 10 Kohlenwassserstoffatomen oder einen einwertigen araliphatischen Kohlenwasserstoffrest mit 7 bis 10 Kohlenstoffatomen steht, wobei bei Vorliegen von mehreren Resten R im gleichen Molekül gleichzeitig unterschiediche Reste R vorliegen können,

im Polyurethan-Grundgerüst, das vorzugsweise noch keine ionomere Gruppen enthält, mit einem Polyetherestermonool der Formel

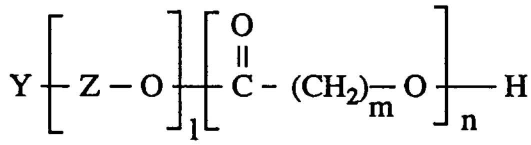 (II)

in welcher Y, Z, l, m und n die in Anspruch 1 angegebene Bedeutung haben, umgesetzt wird, und anschließend, für den Fall, daß noch keine ionischen Gruppen vorliegen, die Einführung der ionischen Gruppen durch Reaktion eines Ionenträgers oder einer in eine ionische Gruppe überführbaren Verbindung mit wenigstens einer weiteren gegen Isocyanat reaktiven Gruppe, mit einer isocyanathaltigen Vorstufe erfolgt.

4. Wäßrige Dispersionen der Polyetherester-modifizierten Polyurethanionomeren nach Anspruch 1.

5. Mischungen von Polyetherester-modifizierten Polyurethanionomer-Dispersionen gemäß Anspruch 1, mit Perfluoralkylgruppen enthaltenden Polymeren.

6. Mischungen gemäß Anspruch 5, dadurch gekennzeichnet, daß die Perfluoralkylgruppen-enthaltenden Polymere solche aus der Reihe der perfluoralkylgruppenhaltigen Vinyl-, Styrol-, Vinyliden-, Acryl-, Methacryl- und $\alpha$-Chloracrylpolymeren mit jeweils 4 bis 20 C-Atomen im Perfluoralkylmonomer sind.

7. Mischungen gemäß Ansprüchen 5 und 6, dadurch gekennzeichnet, daß sie als Perfluoralkylgruppen enthaltende Polymere Acrylat-(co)-polymere mit einem Fluorgehalt von 35 bis 45 Gew.-% enthalten.

8. Verwendung von Mischungen gemäß Ansprüchen 5 bis 7 als Hydrophobierungs- und Oleophobierungsmittel.

## Claims

1. Water-dispersible, polyetherester-modified polyurethane ionomers, built up from difunctional organic polyisocyanates containing acylurea groups of the formula

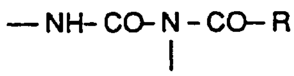 (III),

where

R is a saturated or unsaturated, monovalent, aliphatic hydrocarbon radical having up to 35 carbon atoms, preferably having 9 to 22 carbon atoms, or a monovalent aromatic hydrocarbon radical having 6 to 10 hydrocarbon atoms or a monovalent, araliphatic hydrocarbon radical having 7 to 10 carbon atoms, it being possible, if a plurality of radicals R are present in the same molecule, for different radicals R to be present at the same time,

in the polyurethane basic structure, having a content of ionogenic groups of from 10 to 100 milliequivalents per 100 g of ionomer and a content of polyetherester radicals of from 2 to 40% by weight and a content of ethylene oxide units of from 1 to 35% by weight, in each case based on the polyetherester-modified polyurethane ionomer, in which the polyetherester-modified moiety conforms to the general formula

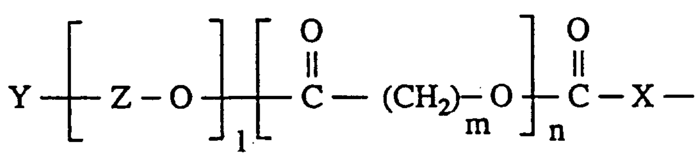 (I)

in which

Y is $R_1$-O- or

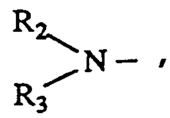

where

$R_1$ is a saturated, aliphatic hydrocarbon radical having 1 to 24 carbon atoms, which is optionally interrupted by 1 or 2 oxygen atoms; an unsaturated, aliphatic hydrocarbon radical having 2 to 24 carbon atoms; a saturated or unsaturated, cycloaliphatic hydrocarbon radical having 3 to 8 carbon atoms and optionally containing 1 to 3 hetero atoms from the series consisting of oxygen, sulphur and nitrogen; an aromatic hydrocarbon radical having 6 to 10 carbon atoms; an araliphatic hydrocarbon radical having 6 to 10 carbon atoms in the aryl moiety and 1 to 14 carbon atoms in the aliphatic moiety,

$R_2$ and $R_3$ are identical or different and are each a saturated, aliphatic hydrocarbon radical having 1 to 18 carbon atoms; an unsaturated, aliphatic hydrocarbon radical having 2 to 18 carbon atoms; a saturated or unsaturated, cycloaliphatic hydrocarbon radical having 3 to 8 carbon atoms and optionally containing 1 to 3 hetero atoms from the series consisting of oxygen, sulphur and nitrogen; an aromatic hydrocarbon radical having 6 to 10 carbon atoms; an araliphatic hydrocarbon radical having 6 to 10 carbon atoms in the aryl moiety and 1 to 14 carbon atoms in the aliphatic moiety,

Z contains components (a) and (b)

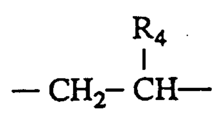 (a)

$—CH_2—CH_2—$ (b)

in which

$R_4$ is a saturated, aliphatic hydrocarbon radical having 1 to 18 carbon atoms or an araliphatic hydrocarbon radical having 6 to 10 carbon atoms in the aryl moiety and 1 to 14 carbon atoms in the aliphatic moiety,

where the proportion of component (a) in Z is from 0 to 40% by weight and the proportion of component (b) in Z is from 60 to 100% by weight, and

X is -NH-, -O- or $-(CH_2)_{1-4}$,

l is from 5 to 60,

m is 4 or 5, and

n is 1, 2, 3, 4 or 5.

**2.** Polyetherester-modified polyurethane ionomers according to Claim 1, having a content of cationogenic groups of from 15 to 50 milliequivalents per 100 g of ionomer and a content of ethylene oxide units of from 5 to 25% by weight and a content of polyetherester radicals of from 5 to 35% by weight, in which, in the formula (I),

$R_1$ is a saturated, aliphatic hydrocarbon radical having 4 to 18 carbon atoms, which is optionally interrupted by 1 or 2 oxygen atoms; an unsaturated, aliphatic hydrocarbon radical having 4 to 18 carbon atoms; a saturated or unsaturated, cycloaliphatic hydrocarbon radical having 5 to 7 carbon atoms and optionally containing 1 to 3 hetero atoms from the series consisting of oxygen, sulphur and nitrogen; phenyl or naphthyl; an araliphatic hydrocarbon radical containing phenyl or naphthyl in the aryl moiety and having 1 to 14 carbon atoms in the aliphatic moiety,

$R_2$ and $R_3$ are identical or different and are each a saturated, aliphatic hydrocarbon radical having 1 to 8 carbon atoms; an unsaturated, aliphatic hydrocarbon radical having 2 to

8 carbon atoms, a saturated or unsaturated, cycloaliphatic hydrocarbon radical having 5 to 7 carbon atoms and optionally containing 1 to 3 hetero atoms from the series consisting of oxygen, sulphur and nitrogen; phenyl or naphthyl; an araliphatic hydrocarbon radical containing phenyl or naphthyl in the aryl moiety and having 1 to 14 carbon atoms in the aliphatic moiety,

Z contains components (a) and (b)

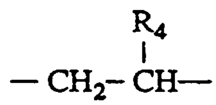 (a)

$-CH_2-CH_2-$ (b)

in which

$R_4$ is methyl or an araliphatic hydrocarbon radical containing phenyl or naphthyl in the aryl moiety and having 1 to 14 carbon atoms in the aliphatic moiety,

where the proportion of component (a) in Z is from 0 to 20% by weight and the proportion of component (b) in Z is from 80 to 100% by weight, and

X is -NH- and

l is from 25 to 50.

**3.** Process for the preparation of polyetherester-modified polyurethane ionomers of Claim 1, characterized in that a polyurethane basic structure, built up from difunctional organic polyisocyanates containing acylurea groups of the formula

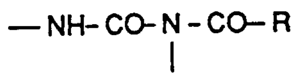 (III),

where

R is a saturated or unsaturated, monovalent, aliphatic hydrocarbon radical having up to 35 carbon atoms, preferably having 9 to 22 carbon atoms, or a monovalent, aromatic hydrocarbon radical having 6 to 10 hydrocarbon atoms or a monovalent, araliphatic hydrocarbon radical having 7 to 10 carbon atoms, it being possible, if a plurality of radicals R are present in the same molecule, for different radicals R to be present at the same time,

in the polyurethane basic structure, which preferably contains no ionomeric groups, is reacted with a polyetherester-monool of the formula

$$Y\left[Z-O\right]_l\left[\overset{\overset{O}{\|}}{C}-(CH_2)_m-O\right]_n H \qquad (II)$$

in which Y, Z, l, m and n are as defined in Claim 1, and subsequently, in the case where no ionic groups are present, the ionic groups are introduced by reaction of an ion carrier or a compound which can be converted into an ionic group and containing at least one further isocyanate-reactive group, with an isocyanate-containing precursor.

**4.** Aqueous dispersions of the polyetherester-modified polyurethane ionomers according to Claim 1.

**5.** Mixtures of polyetherester-modified polyurethane ionomer dispersions according to Claim 1 with polymers containing perfluoroalkyl groups.

6. Mixtures according to Claim 5, characterized in that the polymers containing perfluoroalkyl groups are those from the series consisting of vinyl, styrene, vinylidene, acrylyl, methacrylyl and α-chloroacrylyl polymers containing perfluoroalkyl groups, in each case having 4 to 20 carbon atoms in the perfluoroalkyl monomer.

7. Mixtures according to Claims 5 and 6, characterized in that they contain acrylate (co)polymers having a fluorine content of from 35 to 45% by weight as polymers containing perfluoroalkyl groups.

8. Use of mixtures according to Claims 5 to 7 as hydrophobisizing and oleophobisizing agents.

**Revendications**

1. Ionomères de polyuréthannes à modification polyéther-ester, dispersables dans l'eau, constitués de polyisocyanates organiques difonctionnels à groupes acylurés de formule :

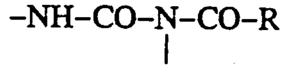 (III),

dans laquelle

R représente un radical hydrocarboné aliphatique monovalent saturé ou insaturé contenant jusqu'à 35 atomes de carbone, de préférence de 9 à 22 atomes de carbone, ou un radical hydrocarboné aromatique monovalent contenant 6 à 10 atomes de carbone, ou un radical hydrocarboné araliphatique monovalent contenant 7 à 10 atomes de carbone, les radicaux R pouvant être différents lorsqu'il y en a plusieurs dans la même molécule,

dans le squelette de polyuréthanne, avec une teneur en groupes ionogènes de 10 à 100 mEq. pour 100 g d'ionomère et une teneur en groupes polyéther-esters de 2 à 40 % en poids et une teneur en motifs d'oxyde d'éthylène de 1 à 35 % en poids, dans les deux cas par rapport à l'ionomère de polyuréthanne à modification polyéther-ester, la partie de la molécule à modification polyéther-ester répondant à la formule générale :

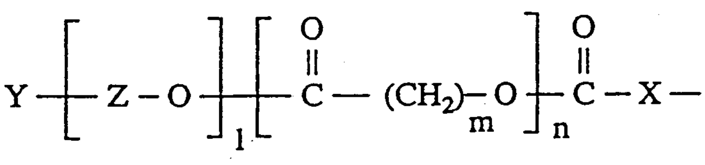 (I)

dans laquelle

Y représente $R_1$-O- ou

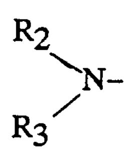

dans lesquels

$R_1$ représente un radical hydrocarboné aliphatique saturé en $C_1$-$C_{24}$ qui peut le cas échéant être interrompu par un ou deux atomes d'oxygène ; un radical hydrocarboné aliphatique insaturé en $C_2$-$C_{24}$ ; un radical hydrocarboné cycloaliphatique saturé ou insaturé en $C_3$-$C_8$, qui peut contenir le cas échéant 1 à 3 hétéroatomes choisis parmi l'oxygène, le soufre et l'azote ; un radical hydrocarboné aromatique en $C_6$-$C_{10}$ ; un radical hydrocarboné araliphatique contenant 6 à 10 atomes de carbone dans la partie aryle et 1 à 14 atomes de carbone dans la partie aliphatique,

$R_2$ et $R_3$, ayant des significations identiques ou différentes, représentent chacun un radical hydrocarboné aliphatique saturé en $C_1$-$C_{18}$ ; un radical hydrocarboné aliphatique insaturé en $C_2$-$C_{18}$ ; un radical hydrocarboné cyclo-aliphatique saturé ou insaturé en $C_3$-$C_8$ qui contient le cas échéant 1 à 3 hétéroatomes choisis parmi l'oxygène, le soufre et l'azote ; un radical hydrocarboné aromatique en $C_6$-$C_{10}$ ; un radical hydrocarboné araliphatique contenant 6 à 10 atomes de carbone dans la partie aryle et 1 à 14 atomes de carbone dans la partie aliphatique,

Z contient les composants (a) et (b)

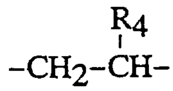 (a)

$-CH_2-CH_2-$ (b)

dans lesquels

$R_4$ représente un radical hydrocarboné aliphatique saturé en $C_1$-$C_{18}$ ou un radical hydrocarboné araliphatique contenant 6 à 10 atomes de carbone dans la partie aryle et 1 à 14 atomes de carbone dans la partie aliphatique, la proportion du composant (a) dans Z étant de 0 à 40 % en poids et la proportion du composant (b) dans Z étant de 60 à 100 % en poids,et

X représente -NH-, -O- ou $-(CH_2)-_{1\ à\ 4}$,

l est un nombre allant de 5 à 60,

m est égal à 4 ou 5 et

n est égal à 1, 2, 3, 4 ou 5.

**2.** Ionomères de polyuréthannes à modification polyéther-ester selon la revendication 1, contenant de 15 à 50 mEq. de groupes cationogènes pour 100 g d'ionomère et de 5 à 25 % en poids de motifs d'oxyde d'éthylène et de 5 à 35 % en poids de groupes polyéther-esters, les symboles de la formule (I) ayant les significations suivantes :

$R_1$ représente un radical hydrocarboné aliphatique saturé en $C_4$-$C_{18}$ qui peut être interrompu le cas échéant par un ou deux atomes d'oxygène ; un radical hydrocarboné aliphatique insaturé en $C_4$-$C_{18}$ ; un radical hydrocarboné cycloaliphatique saturé ou insaturé en $C_5$-$C_7$, qui contient le cas échéant 1 à 3 hétéroatomes choisis parmi l'oxygène, le soufre et l'azote ; un groupe phényle ou naphtyle; un radical hydrocarboné araliphatique dont la partie aryle consiste en une partie phényle ou naphtyle et dont la partie aliphatique contient 1 à 14 atomes de carbone,

$R_2$ et $R_3$, ayant des significations identiques ou différentes, représentent chacun un radical hydrocarboné aliphatique saturé en $C_1$-$C_8$ ; un radical hydrocarboné aliphatique insaturé en $C_2$-$C_8$ ; un radical hydrocarboné cycloaliphatique saturé ou insaturé en $C_5$-$C_7$, qui peut contenir le cas échéant 1 à 3 hétéroatomes choisis parmi l'oxygène, le soufre et l'azote ; un groupe phényle ou napthyle ; un radical hydrocarboné araliphatique dont la partie aryle consiste en un groupe phényle ou naphtyle et dont la partie aliphatique contient de 1 à 14 atomes de carbone,

Z contient les composants (a) et (b)

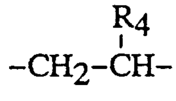 (a)

$-CH_2-CH_2-$ (b)

dans lesquels

$R_4$ représente un groupe méthyle ou un radical hydrocarboné araliphatique dont la partie aryle consiste en un groupe phényle ou napthyle et dont la partie aliphatique contient de 1 à 14 atomes de carbone,

la proportion du composant (a) dans Z étant de 0 à 20 % en poids et la proportion du composant (b) dans Z étant de 80 à 100 % en poids, et

X représente -NH- et

l est un nombre allant de 25 à 50.

**3.** Procédé de préparation des ionomères de polyuréthannes à modification polyéther-ester de la revendication 1, caractérisé en ce que l'on fait réagir un squelette de poluréthanne constitué de polyisocyanates organiques difonctionnels à groupes acylurés de formule :

$$-NH-CO-\underset{|}{N}-CO-R \qquad (III),$$

dans laquelle

R représente un radical hydrocarboné aliphatique monovalent saturé ou insaturé contenant jusqu'à 35 atomes de carbone et de préférence de 9 à 22 atomes de carbone, ou un radical hydrocarboné aromatique monovalent en $C_6$-$C_{10}$ ou un radical hydrocarboné araliphatique monovalent en $C_7$-$C_{10}$, les groupes R pouvant être différents lorsqu'il y en a plusieurs dans la même molécule,

dans le squelette de polyuréthanne, qui de préférence ne contient pas encore de groupes ionomères, avec un polyéther-ester-monool de formule :

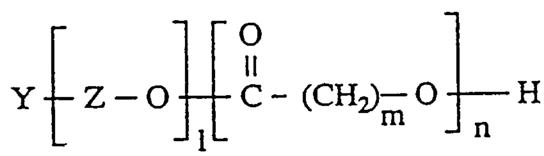

(II)

dans laquelle Y, Z, l, m et n ont les significations indiquées dans la revendication 1,
puis, lorsqu'il n'y a pas encore de groupes ioniques, on introduit les groupes ioniques par réaction d'un fournisseur d'ions ou d'un composé convertible en groupe ionique et contenant au moins un autre groupe réactif avec les isocyanates, avec un produit intermédiaire contenant des groupes isocyanates.

**4.** Dispersions aqueuses des ionomères de polyuréthannes à modification polyéther-ester selon la revendication 1.

**5.** Mélanges des dispersions d'ionomères de polyuréthannes à modification polyéther-ester selon la revendication 1 avec des polymères contenant des groupes perfluoralkyles.

**6.** Mélanges selon la revendication 5, caractérisés en ce que les polymères à groupes perfluoralkyles sont choisis dans le groupe formé par les polymères vinyliques, styréniques, vinylidéniques, acryliques, méthacryliques et $\alpha$-chloracryliques contenant des groupes perfluoralkyles et dans chaque cas 4 à 20 atomes de carbone dans le monomère perfluoralkylique.

**7.** Mélanges selon les revendications 5 et 6, caractérisés en ce que les polymères à groupes perfluoralkyles sont des (co)polymères d'acrylates à une teneur en fluor de 35 à 45 % en poids.

**8.** Utilisation des mélanges selon les revendications 5 à 7 en tant que produits d'hydrofugeage et d'oléofugeage.